# EUROPÄISCHE PATENTANMELDUNG

(11) **EP 1 303 118 A1**
(43) Veröffentlichungstag der Anmeldung: **16.04.2003**
(21) Anmeldenummer: 01124526.3
(22) Anmeldetag: 12.10.2001
(51) Int. Cl.: H04M 7/00

(54) **Verfahren zur Herstellung einer Kommunikationsverbindung zwischen Teilnehmerstellen eines zwei Kommunikationsnetze umfassenden Vermittlungssystems**

(71) Anmelder: SIEMENS AKTIENGESELLSCHAFT, 80333 München (DE)
(72) Erfinder: Knaebchen, Andreas, Dr., 81377 München (DE)

(57) **Zusammenfassung**

In einem Vermittlungssystem, dessen Teilnehmerstellen an Vermittlungsstellen eines ersten Kommunikationsnetzes (NET1), angeschlossen sind, die durch ein zweites Kommunikationsnetz (NET2), wie das Internet, mittels Übergangseinrichtungen (MG1 bis MGn) miteinander verbunden sind, denen gesonderte Steuereinrichtungen (MGC1, MGC2) zur Steuerung des Verbindungsverkehrs nach Maßgabe von Steuer- und/oder Signalisierungsinformationen zugehörig sind, wird eine Kommunikationsverbindung zu einer anzurufenden Teilnehmerstelle (SUB2), deren Erreichbarkeit von einer Vermittlungsstelle (SW2) zu einer anderen Vermittlungsstelle (SWn) verändert worden ist, dadurch hergestellt, dass zunächst eine Signalisierungsverbindung zur Vermittlungsstelle (SW2), an der die anzurufende Teilnehmerstelle (SUB2) bisher erreichbar war, aufgebaut wird, woraufhin eine Kommunikationsverbindung an Hand der die geänderte Erreichbarkeit der anzurufenden Teilnehmerstelle (SUB2') angebenden Steuerungs- und/oder Signalisierungsinformation direkt zu der anderen Vermittlungsstelle (SWn), an der die anzurufende Teilnehmerstelle nunmehr erreichbar ist, über die diese Vermittlungsstelle (SWn) mit dem zweiten Kommunikationsnetz (NET2) verbindende Übergangseinrichtung (MG2) hergestellt wird.

## Beschreibung

Verfahren zur Herstellung einer Kommunikationsverbindung zwischen Teilnehmerstellen eines zwei Kommunikationsnetze umfassenden Vermittlungssystems

Die Erfindung bezieht sich auf ein Verfahren zur Herstellung einer Kommunikationsverbindung zwischen anrufenden und anzurufenden Teilnehmerstellen, die an Vermittlungsstellen eines ersten Kommunikationsnetzes, insbesondere eines Zeitmultiplex-Vermittlungsnetzes, angeschlossen sind, dessen Vermittlungsstellen mittels Übergangseinrichtungen durch ein zweites Kommunikationsnetz, insbesondere ein Paket-Vermittlungsnetz, wie ein IP-Netz, miteinander verbunden sind, wobei den Übergangseinrichtungen gesonderte Steuereinrichtungen zugehörig sind, die einen Verbindungsverkehr über ihre jeweils zugehörigen Übergangseinrichtungen nach Maßgabe von die jeweilige Kommunikationsverbindung betreffenden Steuer- und/oder Signalisierungsinformationen steuern, welche im Zuge von Signalisierungsverbindungen übertragen werden.

Unter einem IP-Netz wird hier ein Vermittlungs- und Übertragungsnetz verstanden, in welchem Kommunikationssignale auf der Basis eines Internet-Protokolls vermittelt bzw. übertragen werden.

Vermittlungsnetzkonfigurationen der vorstehend erwähnten Art werden zukünftig konventionelle Kommunikationsnetze, wie Zeitmultiplex-Vermittlungsnetze, ergänzen oder sogar ablösen. In den Übergangseinrichtungen zwischen den Vermittlungsstellen des ersten Kommunikationsnetzes und dem zweiten Kommunikationsnetz erfolgt dann eine Umsetzung der jeweils zu übertragenden Kommunikationssignale entsprechend den jeweiligen Netzbedingungen. Ist das erste Kommunikationsnetz ein Zeitmultiplex-Vermittlungsnetz, wie beispielsweise das unter der Bezeichnung EWSD kommerziell eingesetzte Kommunikationsnetz, und handelt es sich bei dem zweiten Kommunikationsnetz um zum Beispiel ein Paket-Vermittlungsnetz, wie ein IP-Netz, so ist in den Übergangseinrichtungen zwischen den Vermittlungsstellen des ersten Kommunikationsnetzes und dem zweiten Kommunikationsnetz jeweils eine Umsetzung von Zeitmultiplexsignalen in Paketsignalen und umgekehrt von Paketsignalen in Zeitmultiplexsignale erforderlich. Dies heißt, dass im Falle einer Kommunikationsverbindung zwischen einer an einer Vermittlungsstelle des ersten Kommunikationsnetzes angeschlossenen anrufenden Teilnehmerstelle und einer ebenfalls an einer Vermittlungsstelle des ersten Kommunikationsnetzes, insbesondere einer anderen Vermittlungsstelle des betreffenden ersten Kommunikationsnetzes angeschlossenen anzurufenden Teilnehmerstelle eine zweifache Signalumsetzung entsprechend den zuvor betrachteten Signalumsetzungen erforderlich ist. Dies bedingt eine relativ hohe Umsetzleistung und damit Rechnerleistung in den zwischen den betreffenden Vermittlungsstellen des ersten Kommunikationsnetzes und dem zweiten Kommunikationsnetz vorgesehenen Übergangseinrichtungen, die im Regelfall rechnergesteuert sind, um möglichst schnelle Umsetzungen der Kommunikationssignale zu erreichen. Solche schnellen Umsetzungen der Kommunikationssignale sind erforderlich, damit die durch die betreffenden Umsetzungen hervorgerufenen Verzögerungen bei der Weiterleitung von Kommunikationssignalen nicht als störend und die Qualität der jeweiligen Kommunikationsverbindung herabsetzend empfunden werden.

Zusätzlich zu dem vorstehend aufgezeigten Problem tritt noch ein weiteres, gegebenenfalls gravierenderes Problem im Falle einer Anrufweiter- bzw. -um-leitung bezüglich einer anzurufenden Teilnehmerstelle auf. Bei einer solchen Anrufumleitung wird nämlich in konventioneller Weise eine Kommunikationsverbindung zunächst zu der Vermittlungsstelle hin aufgebaut, an der die anzurufende Teilnehmerstelle bisher erreichbar war, und sodann wird von dieser Vermittlungsstelle aus eine Umleitungs-Kommunikations-verbindung zu der Vermittlungsstelle hin aufgebaut, an der die betreffende anzurufende Teilnehmerstelle nunmehr erreichbar ist. Dies bedeutet aber unter Zugrundelegung der eingangs betrachteten Vermittlungssystemkonfiguration, dass zusätzlich zu den zuvor betrachteten Umsetzvorgängen weitere Umsetzvorgänge bezüglich der jeweils zu übertragenen Kommunikationssignale zwischen anrufender und anzurufender Teilnehmerstelle auszuführen sind. Damit sind dann aber merkliche Verzögerungszeiten und damit eine Qualitätsverschlechterung bei der Übertragung der jeweiligen Kommunikationssignale zwischen anrufender Teilnehmerstelle und anzurufender Teilnehmerstelle verbunden.

Diese Verzögerungszeiten resultieren dabei hauptsächlich aus Paketierungs- und Depaketierungsvorgängen infolge der Übergänge zwischen den genannten Vermittlungsnetzen. Unter Zugrundelegung einer typischen Paketierungs- bzw. Depaketierungszeit zwischen 10 und 30 ms und einem durch die Empfindlichkeit des menschlichen Gehörs gegenüber Schallverzögerungen gegebenen Verzögerungs-Schwellwert von etwa 100 ms wird eine n-fache Umsetzung von Kommunikationssignalen, durch die die sich dadurch ergebende Umsetzungs-Gesamtverzögerungszeit den genannten Schwellwert überschreitet, als nicht mehr hinnehmbar empfunden.

Im Zusammenhang mit dem gerade erwähnten Verzögerungs-Schwellwert ist überdies zu berücksichtigen, dass im Zuge der jeweiligen Kommunikationsverbindung noch verzögerungsreiche Wegeabschnitte enthalten sein können, wie eine oder mehrere Mobilfunkstrecken oder eine Satellitenstrecke.

Der Erfindung liegt daher die Aufgabe zugrunde, einen Weg zu zeigen, wie auf relativ einfache Weise bei einem Verfahren der eingangs genannten Art zwischen einer anrufenden Teilnehmerstelle und einer anzurufenden Teilnehmerstelle im Falle einer Anrufumleitung Kommunikationssignale auf direktem Weg zwischen der Vermittlungsstelle des ersten Kommunikationsnetzes, an der die anrufende Teilnehmerstelle angeschlossen ist, und der Vermittlungsstelle des ersten Kommunikationsnetzes, an der die anzurufende Teilnehmerstelle nunmehr erreichbar ist, über das zweite Kommunikationsnetz hergestellt werden kann, wobei die zuvor angesprochenen Probleme vermieden sind, vor allem im Hinblick auf die erwähnten Verzögerungszeiten.

Gelöst wird die vorstehend aufgezeigte Aufgabe bei einem Verfahren der eingangs genannten Art erfindungsgemäß dadurch, dass eine Kommunikationsverbindung zu einer anzurufenden Teilnehmerstelle, deren Erreichbarkeit von einer Vermittlungsstelle zu einer anderen Vermittlungsstelle des ersten Kommunikationsnetzes verändert worden ist, dadurch hergestellt wird, dass im Zuge einer zunächst hergestellten Signalisierungsverbindung zu der Vermittlungsstelle, an der die anzurufende Teilnehmerstelle bisher erreichbar war, festgestellt wird, dass diese Teilnehmerstelle nunmehr an einer anderen Vermittlungsstelle des ersten Kommunikationsnetzes erreichbar ist,
und dass die Kommunikationsverbindung zu dieser anderen Vermittlungsstelle an Hand einer die geänderte Erreichbarkeit der anzurufenden Teilnehmerstelle angebenden Steuerungsund/oder Signalisierungsinformation direkt über die diese Vermittlungsstelle mit dem zweiten Kommunikationsnetz verbindende Übergangseinrichtung hergestellt wird.

Die Erfindung bringt den Vorteil mit sich, dass eine Kommunikationsverbindung im Falle einer Anrufumleitung zu einer anzurufenden Teilnehmerstelle, deren Erreichbarkeit sich von einer Vermittlungsstelle des ersten Kommunikationsnetzes zu einer anderen Vermittlungsstelle des ersten Kommunikationsnetzes geändert hat, praktisch genauso hergestellt werden kann wie eine normale Verbindung zwischen einer an einer Vermittlungsstelle des ersten Kommunikationsnetzes angeschlossenen anrufenden Teilnehmerstelle und einer an einer anderen Vermittlungsstelle des ersten Kommunikationsnetzes angeschlossenen anzurufenden Teilnehmerstelle. Dies heißt, dass im Falle einer Anrufweiterleitung zu einer anzurufenden Teilnehmerstelle die Kommunikationssignale auch nur dieselbe Anzahl von Umsetzvorgängen zwischen erstem Kommunikationsnetz und zweiten Kommunikationsnetz erfahren wie im Falle einer normalen Verbindung zwischen zwei Teilnehmerstellen. Damit sind durch die vorliegende Erfindung die Probleme beseitigt, die durch die oben betrachtete konventionelle Anrufweiterleitung entstehen können. Vor allem aber lassen sich die oben angesprochenen Verzögerungszeiten auf ein bei der Sprachsignalübertragung nicht mehr störendes Ausmaß verringern.

Zweckmäßigerweise wird die genannte Signalisierungsverbindung zwischen der Vermittlungsstelle, an der die anrufende Teilnehmerstelle angeschlossen ist, und der Vermittlungsstelle an der die anzurufende Teilnehmerstelle bisher erreichbar war, über Steuereinrichtungen aufgebaut, die zum einen mit den betreffenden Vermittlungsstellen und den mit diesen verbundenen Übergangseinrichtungen verbunden sind und die zum anderen miteinander verbunden sind. Dies ermöglicht in vorteilhafter Weise eine besonders flexible Herstellung von Signalisierungsverbindungen zwischen anrufenden und anzurufenden Teil-nehmerstellen innerhalb des gesamten Vermittlungssystems. Dabei können in den einzelnen Vermittlungsnetzen ohnehin vorhandene Standardeinrichtungen benutzt werden, die für den Aufbau von Kommunikationsverbindungen im jeweiligen Vermittlungsnetz eingesetzt sind.

Eine besonders effiziente Verfahrensweise hinsichtlich der Herstellung von Signalisierungs- und Kommunikationsverbindungen ergibt sich ferner dadurch, dass im Zuge einer Signalisierungsverbindung zu der anzurufenden Teilnehmerstelle deren Erreichbarkeit von einer Vermittlungsstelle zu einer anderen Vermittlungsstelle des ersten Kommunikationsnetzes verändert worden ist, in den in diese Signalisierungsverbindung einbezogenen Steuereinrichtungen jeweils eine die Rufnummern der jeweiligen anrufenden und anzurufenden Teilnehmerstellen umfassende Steuerungs- und/oder Signalisierungsinformationen gespeichert wird,
dass die Steuereinrichtung, die mit der Vermittlungsstelle verbunden ist, an der die anzurufende Teilnehmerstelle bisher erreichbar war, von der betreffenden Vermittlungsstelle eine Steuerungs- und/oder Signalisierungsinformation über die Vermittlungsstelle zugeführt erhält, an der die betreffende anzurufende Teilnehmerstelle nunmehr erreichbar ist
und dass diese Steuereinrichtung aus einem Vergleich der ihr zugeführten genannten Steuerungs- bzw. Signalisierungsinformation mit der in ihr gespeicherten Steuerungs- und/oder Signalisierungsinformation das Vorliegen einer Rufumleitungssituation erkennt und daraufhin an Hand der ihr nunmehr vorliegenden Steuerungs- bzw. Signalisierungsinformation die Herstellung einer Kommunikationsverbindung zwischen dem zweiten Kommunikationsnetz und der Vermittlungsstelle des ersten Kommunikationsnetzes, an der die anzurufende Teilnehmerstelle nunmehr erreichbar ist, über diejenige Übergangseinrichtung bewirkt, mit der die betreffende Vermittlungsstelle des ersten Kommunikationsnetzes und das zweite Kommunikationsnetz verbunden sind. Hierdurch ergibt sich der Vorteil, dass mit einer relativ einfachen und sicheren Signalisierungsprozedur vor der Herstellung der Kommunikationsverbindung zwischen anrufender Teilnehmerstelle und anzurufender Teilnehmerstelle gearbeitet werden kann, deren Erreichbarkeit sich von einer Vermittlungsstelle zu einer anderen Vermittlungsstelle des ersten Kommunikationsnetzes geändert hat. Auch für diese Signalisierungsprozedur können in den einzelnen Vermittlungsnetzen ohnehin vorhandene Standardeinrichtungen benutzt werden, die für den Aufbau von Kommunikationsverbindungen im jeweiligen Vermittlungsnetz eingesetzt sind.

Zweckmäßigerweise wird die jeweilige Signalisierungsverbindung zwischen der jeweiligen anrufenden Teilnehmerstelle und der jeweils anzurufenden Teilnehmerstelle in entsprechender Weise behandelt wie die jeweilige Kommunikationsverbindung zwischen den betreffenden Teilnehmerstellen. Dies bringt den Vorteil mit sich, dass eine Signalisierungsverbindung nach Erkennen einer Rufumleitungssituation bezüglich der anzurufenden Teilnehmerstelle nicht mehr über diejenige Vermittlungsstelle des ersten Kommunikationsnetzes geleitet werden muß, an der die anzurufende Teilnehmerstelle bisher erreichbar war, was eine Entlastung der Signalisierungsverarbeitung bedeutet.

Vorzugsweise werden die in den genannten Steuereinrichtungen der an der jeweiligen Verbindung beteiligten Übergangseinrichtungen gespeicherten Steuerungs- bzw. Signalisierungsinformationen nach Beendigung der Kommunikationsverbindung zwischen den jeweils miteinander verbundenen Teilnehmerstellen gelöscht. Hierdurch ist sichergestellt, dass nach Beendigung der jeweiligen Kommunikationsverbindung keine unnötigen Informationen bzw. Daten mehr in den Steuereinrichtungen zurückbleiben.

Anhand einer Zeichnung wird die Erfindung nachstehend beispielsweise näher erläutert.

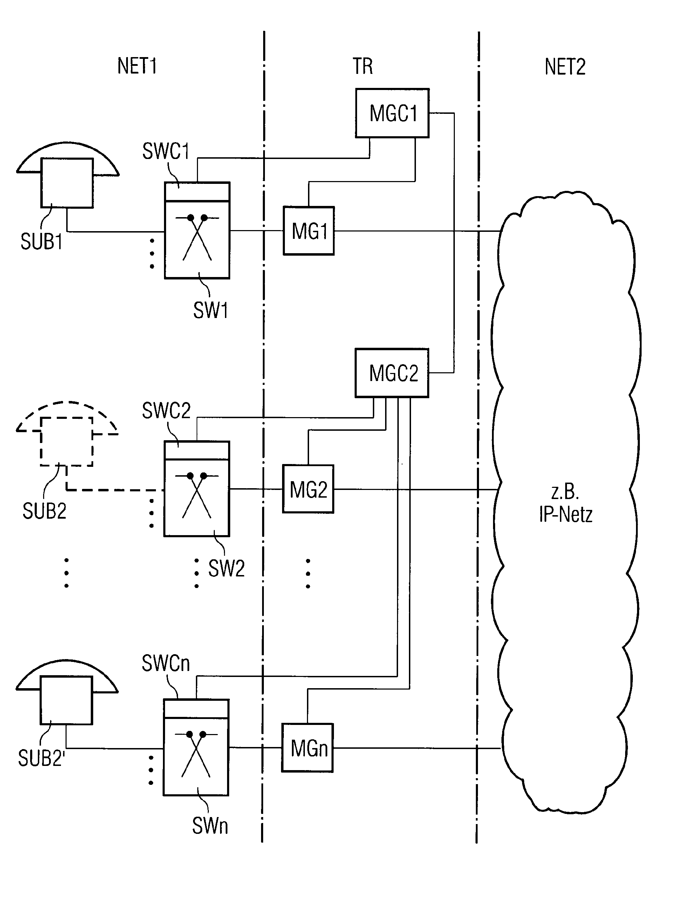

In der Zeichnung ist ein Beispiel eines Vermittlungssystems veranschaulicht, welches aus zwei unterschiedlichen Kommunikationsnetzen NET1 und NET2 besteht, die über einen Übergangsbereich TR miteinander verbunden sind.

Zu dem in der Zeichnung dargestellten Vermittlungssystem gehört ein erstes Kommunikationsnetz NET1, bei dem es sich beispielsweise um ein Zeitmultiplex-Vermittlungssystem, wie das kommerziell im Einsatz befindliche System EWSD, handeln kann. Dieses erste Kommunikationsnetz NET1 weist eine Anzahl von Vermittlungsstelle SW1, SW2 bis SWn auf, die mit eigenen, hier nur schematisch angedeuteten Steuereinrichtungen SWC1, SWC2 bis SWCn ausgestattet sind. Diese Steuereinrichtungen SWC1 bis SWCn dienen sowohl der Einstellung der jeweiligen Vermittlungsstelle nach Maßgabe von Steuerungs- und/oder Signalisierungsinformationen, insbesondere Wahlinformationen, von Teilnehmerstellen, die an der jeweiligen Vermittlungsstelle angeschlossen sind, als auch zur Aufnahme und Weiterleitung solcher Steuerungs- und/oder Signalisierungsinformationen von bzw. zu dem in der Zeichnung dargestellten Übergangsbereich TR.

An den Vermittlungsstellen SW1 bis SWn des ersten Kommunikationsnetzes NET1 ist eine Vielzahl von Teilnehmerstellen angeschlossen, die Fernsprechteilnehmerendgeräte, Faximilegeräte, Datenendgeräte, PCs oder andere Kommunikationsendgeräte umfassen können. In der Zeichnung ist bezüglich der Vermittlungsstelle SW1 lediglich eine derartige Teilnehmerstelle SUB1 angedeutet. Ferner sind in der Zeichnung bezüglich der Vermittlungsstellen SW2 und SWn noch Teilnehmerstellen SUB2 und SUB2' angedeutet, wobei die Teilnehmerstelle SUB2 durch gestrichelte Linien dargestellt ist. Hierdurch soll zum Ausdruck gebracht sein, dass die Teilnehmerstelle SUB2 bisher an der Vermittlungsstelle SW2 des ersten Kommunikationsnetzes NET1 erreichbar war, nunmehr aber als Teilnehmerstelle SUB2' an der Vermittlungsstelle SWn des ersten Kommunikationsnetzes NET1 erreichbar ist.

Das zweite Kommunikationsnetz NET2, das beispielsweise ein Paket-Vermittlungsnetz sein kann in welchem Kommunikationssignale als ATM-Signale oder als IP-Signale übertragen werden, wie zum Beispiel im Internet und das demgemäß zum Beispiel durch ein IP-Netz gebildet sein kann, ist in der Zeichnung nur schematisch angedeutet.

Wie aus der Zeichnung ersichtlich ist, sind die Vermittlungsstellen SW1 bis SWn des ersten Kommunikationsnetzes NET1 mit dem zweiten Kommunikationsnetz NET2 über den bereits erwähnten Übergangsbereich TR verbunden. Zu diesem Übergangsbereich TR gehören einzelne bzw. gesonderte Übergangseinrichtungen MG1, MG2 bis MGn, über die die Vermittlungsstellen SW1, SW2 bis SWn des ersten Kommunikationsnetzes NET1 mit dem zweiten Kommunikationsnetz NET2 verbunden sind. Zum anderen gehören zu dem betreffenden Übergangsbereich TR Steuereinrichtungen, wie MGC1 und MGC2, die den gerade erwähnten Übergangseinrichtungen MG1 bzw. MG2, MGn und den Vermittlungsstellen SW1 bzw. SW2, SWn des ersten Kommunikationsnetzes NET1 zugeordnet sind und die überdies miteinander verbunden sind. Über diese Steuereinrichtungen, von denen der Zeichnung lediglich die beiden Steuereinrichtungen MGC1 und MGC2 dargestellt sind, erfolgt der Aufbau von Signalisierungsverbindungen zwischen anrufenden und anzurufenden Teilnehmerstellen, deren Kommunikationsverbindungen dann über die zugehörigen Vermittlungsstellen des ersten Kommunikationsnetzes NET1, die Übergangseinrichtung MG1 bis MGn des Übergangsbereichs TR und das zweite Kommunikationsnetz NET2 aufgebaut werden. Die dabei ausgeführten Verfahrensschritte werden nachstehend im Zusammenhang mit einer Anrufumleitungssituation bezüglich einer anzurufenden Teilnehmerstelle näher erläutert.

Gemäß der Erfindung erfolgt die Herstellung einer Kommunikationsverbindung zwischen einer anrufenden Teilnehmerstelle, wie der in der Zeichnung dargestellten Teilnehmerstelle SUB1, die an der Vermittlungsstelle SW1 des ersten Kommunikationsnetzes NET1 angeschlossen ist, und einer anzurufenden Teilnehmerstelle, die bisher als Teilnehmerstelle SUB2 an der Vermittlungsstelle SW2 des ersten Kommunikationsnetzes NET1 erreichbar war, die allerdings nunmehr an einer anderen Vermittlungsstelle, nämlich an der Vermittlungsstelle SWn des ersten Kommunikationsnetzes NET1 erreichbar ist und die dort als SUB2' bezeichnet ist, nachdem zuvor eine Signalisierungsverbindung aufgebaut worden ist. Im Hinblick auf die anzurufende Teilnehmerstelle ist anzumerken, dass die Teilnehmerstelle SUB2' nach wie vor unter der Rufnummer erreichbar sein soll, die von der anrufenden Teilnehmerstelle SUB1 für die Herstellung einer Kommunikationsverbindung zu der betreffenden anzurufenden Teilnehmerstelle gewählt worden ist.

Die vorstehend erwähnte Signalisierungsverbindung wird zunächst von der anrufenden Teilnehmerstelle SUB1 über die Vermittlungsstelle SW1 bzw. über die dieser zugehörige Steuereinrichtung SWC1, sodann über die mit dieser Vermittlungsstelle SW1 verbundene Steuereinrichtung MGC1 des Übergangsbereichs TR sowie von der Steuereinrichtung MGC1 zu der Steuereinrichtung MGC2 hin aufgebaut, die der Vermittlungsstelle SW2 zugehörig ist, an der die anzurufende Teilnehmerstelle SUB2 bisher erreichbar war. Das zweite Kommunikationsnetz NET2 ist in diese Signalisierungsverbindung nicht einbezogen.

In den Steuereinrichtungen MGC1, MGC2 des Übergangssystems wird im Zuge der jeweiligen Signalisierungsverbindung eine die Rufnummer der jeweils anrufenden Teilnehmerstelle und der jeweils anzurufenden Teilnehmerstelle umfassende Steuerungs- bzw. Signalisierungsinformation gespeichert. Von der Steuereinrichtung MGC2 wird im Zuge der gerade betrachteten Signalisierungsverbindung eine Steuerungs- bzw. Signalisierungsinformation an die Vermittlungsstelle SW2 des ersten Kommunikationsnetzes NET1 abgegeben, an der die anzurufende Teilnehmerstelle SUB2 bisher erreichbar war. Diese anzurufende Teilnehmerstelle SUB2 hat in der Vermittlungsstelle SW2 ihre Rufumleitungs- bzw. Umzugsadresse hinterlassen, das heißt diejenige Rufnummer, unter der die betreffende anzurufende Teilnehmerstelle SUB2 nunmehr erreichbar ist, und zwar im vorliegenden Falle an einer anderen Vermittlungsstelle des ersten Kommunikationsnetzes NET1. Im dargestellten Beispiel ist dies die Vermittlungsstelle SWn des ersten Kommunikationsnetzes NET1, in welchem die betreffende anzurufende Teilnehmerstelle nunmehr als SUB2' erreichbar ist.

Die Steuereinrichtung MGC2 erhält daraufhin von der Vermittlungsstelle SW2 eine Steuerungs- bzw. Signalisierungsinformation zurück, welche die Rufnummer der anrufenden Teilnehmerstelle (SUB1), die Rufnummer der anzurufenden Teilnehmerstelle (SUB2) und die Anrufumleitungsnummer (SUB2') der betreffenden anzurufenden Teilnehmerstelle aufweist. Die Steuereinrichtung MGC2 vergleicht diese Information mit der zuvor erwähnten, in ihr gespeicherten Information bezüglich anrufender Teilnehmerstelle und anzurufender Teilnehmerstelle. Aus diesem Vergleich erkennt die Steuereinrichtung MGC2, dass es sich im vorliegenden Fall um eine Rufumleitungssituation handelt, dass also die gewünschte anzurufende Teilnehmerstelle SUB2 nicht mehr an der Vermittlungsstelle SW2 erreichbar ist. Die Steuereinrichtung MGC2 erkennt ferner aus dem betreffenden Vergleich, wo die gewünschte anzurufende Teilnehmerstelle nunmehr erreichbar ist. Sie veranlaßt daraufhin gegebenenfalls zusammen mit der oben erwähnten Steuereinrichtung MGC1, dass eine Kommunikationsverbindung zwischen der anrufenden Teilnehmerstelle SUB1 und der Teilnehmerstelle SUB2' über die Vermittlungsstelle SW1 des ersten Kommunikationsnetzes, die Übergangseinrichtung MG1 des Übergangsbereichs TR, das zweite Kommunikationsnetz NET2, die Übergangseinrichtung MGn des Übergangsbereichs TR und die Vermittlungsstelle SWn aufgebaut wird als derjenigen Vermittlungsstelle, an der die anzurufende Teilnehmerstelle SUB2' nunmehr erreichbar ist.

Durch die vorstehend erläuterte Verfahrensweise ist erreicht, dass bei Vorliegen einer Rufumleitungssituation bezüglich einer anzurufenden Teilnehmerstelle in die zwischen anrufender Teilnehmerstelle und anzurufender Teilnehmerstelle herzustellende Kommunikationsverbindung lediglich zwei Vermittlungsstellen des ersten Kommunikationsnetzes NET1 und damit nur zwei Übergangseinrichtungen, wie die Übergangseinrichtungen MG1 und MGn bei dem erläuterten Beispiel, für eine Verbindung über das zweite Kommunikationsnetz NET2 einbezogen sind.

Nachdem in beiden Kommunikationsnetzen NET1 und NET2 unterschiedliche Übertragungsprozeduren und -formate für Kommunikationssignale realisiert sind, wie dies eingangs erwähnt worden ist, ist auch im Falle der erläuterten Rufumleitungssituation nur eine zweifache Kommunikationssignalumsetzung erforderlich. Damit ist auch in diesem Falle die Qualität der Signalübertragung dieselbe wie im Falle einer normalen Verbindung zwischen einer an einer Vermittlungsstelle des ersten Kommunikationsnetzes NET1 angeschlossenen Teilnehmerstelle und einer an einer anderen Vermittlungsstelle desselben Kommunikationsnetzes NET1 angeschlossenen anzurufenden Teilnehmerstelle.

Die Signalisierungsverbindung zwischen der jeweiligen anrufenden Teilnehmerstelle und der jeweils anzurufenden Teilnehmerstelle kann in entsprechender Weise behandelt werden wie die Kommunikationsverbindung zwischen den betreffenden Teilnehmerstellen. Dies heißt bezogen auf das zuvor erläuterte Ausführungsbeispiel gemäß der Erfindung, dass die Signalisierungsverbindung zwischen der anrufenden Teilnehmerstelle SUB1 und der Vermittlungsstelle SW2, an der die anzurufende Teilnehmerstelle SUB2 bisher erreichbar war, nach Erkennen der Rufumleitungssituation bezüglich dieser anzurufenden Teilnehmerstelle zukünftig nicht mehr über diese Vermittlungsstelle SW2 geleitet wird, sondern von der Steuereinrichtung MGC2 direkt zur Vermittlungsstelle SWn hin abgegeben bzw. von dieser aufgenommen wird, an der die anzurufende Teilnehmerstelle SUB2' nunmehr erreichbar ist.

Um eine Entlastung der einzelnen Steuereinrichtungen des dargestellten Vermittlungssystems nach Beendigung der jeweils hergestellten Verbindungen zu erreichen, werden die in den genannten Steuereinrichtungen der an der jeweiligen Verbindung beteiligten Übergangseinrichtung gespeicherten Steuerungs- bzw. Signalisierungsinformationen nach Beendigung der Kommunikationsverbindung zwischen den jeweils miteinander verbundenen Teilnehmerstellen gelöscht. Dadurch ist sichergestellt, dass in den betreffenden Steuereinrichtungen nur Informationen über tatsächlich bestehende Verbindungen enthalten sind.

Abschließend sei noch angemerkt, dass bei dem in der Zeichnung dargestellten Ausführungsbeispiel die Steuereinrichtung MGC2 als eine Steuereinrichtung dargestellt ist, die sowohl den Vermittlungsstellen SW2 und SWn des ersten Kommunikationsnetzes NET1 als auch den Übergangseinrichtungen MG2 und MGn des Übergangssystems TR zugehörig ist, über die die betreffenden Vermittlungsstellen SW2, SWn mit dem zweiten Kommunikationsnetz NET2 verbunden sind. Es dürfte jedoch ohne weiteres einzusehen sein, dass jeder Vermittlungsstelle des ersten Kommunikationsnetzes NET1 eine entsprechende Steuereinrichtung des Steuerbereichs TR zugeordnet sein kann, über die die betreffende Vermittlungsstelle mit dem zweiten Kommunikationsnetz NET2 verbunden ist. In diesem Falle erfolgt eine entsprechende Übertragung der Steuerungs- und/oder Signalisierungsinformation zwischen den einzelnen Steuereinrichtungen wie bei der Übertragung zwischen den Steuereinrichtungen MGC1 und MGC2, so dass die Herstellung der jeweils gewünschten Kommunikationsverbindung zwischen anrufender Teilnehmerstelle und anzurufender Teilnehmerstelle praktisch so abläuft, wie dies oben erläutert worden ist.

## Patentansprüche

1. Verfahren zur Herstellung einer Kommunikationsverbindung zwischen anrufenden und anzurufenden Teilnehmerstellen, die an Vermittlungsstellen eines ersten Kommunikationsnetzes (NET1), insbesondere eines Zeitmultiplex-Vermittlungsnetzes angeschlossen sind, dessen Vermittlungsstellen mittels Übergangseinrichtungen (MG1 bis MGn) durch ein zweites Kommunikationsnetz (NET2), insbesondere ein Paket-Vermittlungsnetz, wie das Internet, miteinander verbunden sind,
wobei den Übergangseinrichtungen (MG1 bis MGn) gesonderte Steuereinrichtungen (MGC1, MGC2) zugehörig sind, die einen Verbindungsverkehr über ihre jeweils zugehörigen Übergangseinrichtungen (MG1 bis MGn) nach Maßgabe von die jeweilige Kommunikationsverbindung betreffenden Steuer- und/oder Signalisierungsinformationen steuern, welche im Zuge von Signalisierungsverbindungen übertragen werden,
**dadurch gekennzeichnet,**
**dass** die Kommunikationsverbindung zu einer anzurufenden Teilnehmerstelle (SUB2), deren Erreichbarkeit von einer Vermittlungsstelle (SW2) zu einer anderen Vermittlungsstelle (SWn) des ersten Kommunikationsnetzes (NET1) verändert worden ist, dadurch hergestellt wird, dass im Zuge einer zunächst hergestellten Signalisierungsverbindung zu der Vermittlungsstelle (SW2), an der die anzurufende Teilnehmerstelle (SUB2) bisher erreichbar war, festgestellt wird, dass diese Teilnehmerstelle (SUB2) nunmehr an einer anderen Vermittlungsstelle (SWn) des ersten Kommunikationsnetzes (NET1) erreichbar ist,
und **dass** die Kommunikationsverbindung zu dieser anderen Vermittlungsstelle (SWn) an Hand einer die geänderte Erreichbarkeit der anzurufenden Teilnehmerstelle (SUB2') angebenden Steuerungs- und/oder Signalisierungsinformation direkt über die diese Vermittlungsstelle (SWn) mit dem zweiten Kommunikationsnetz (NET2) verbindende Übergangseinrichtung (MG2) hergestellt wird.

2. Verfahren nach Anspruch 1, **dadurch gekennzeichnet**, dass die Signalisierungsverbindung zwischen der Vermittlungsstelle (SW1), an der die rufende Teilnehmerstelle (SUB1) angeschlossen ist, und der Vermittlungsstelle, (SW2), an der die anzurufende Teilnehmerstelle (SUB1) bisher erreichbar war, über Steuereinrichtungen (MGC1, MGC2) erfolgt, die zum einen mit den betreffenden Vermittlungsstellen (SW1, SW2) und den mit diesen verbundenen Übergangseinrichtungen (MG1 bis MGn) verbunden sind und die zum anderen miteinander verbunden sind.

3. Verfahren nach Anspruch 1 oder 2, **dadurch gekennzeichnet, dass** im Zuge einer Signalisierungsverbindung zu der anzurufenden Teilnehmerstelle (SUB2), deren Erreichbarkeit von einer Vermittlungsstelle (SW2) zu einer anderen Vermittlungsstelle (SWn) des ersten Kommunikationsnetzes (NET1) verändert worden ist, in den in diese Signalisierungsverbindung einbezogenen Steuereinrichtungen (MGC1, MGC2) jeweils eine die Rufnummern der jeweiligen anrufenden und anzurufenden Teilnehmerstellen (SUB1, SUB2) umfassende Steuerungs- und/oder Signalisierungsinformationen gespeichert wird,
dass die Steuereinrichtung (MGC2), die mit der Vermittlungsstelle (SW2) verbunden ist, an der die anzurufende Teilnehmerstelle (SUB2) bisher erreichbar war, von der betreffenden Vermittlungsstelle (SW2) eine Steuerungs- und/oder Signalisierungsinformation über die Vermittlungsstelle (SWn) zugeführt erhält, an der die betreffende anzurufende Teilnehmerstelle (SUB2') nunmehr erreichbar ist
und dass diese Steuereinrichtung (MGC2) aus einem Vergleich der ihr zugeführten genannten Steuerungs- bzw. Signalisierungsinformation mit der in ihr gespeicherten Steuerungsund/oder Signalisierungsinformation das Vorliegen einer Rufumleitungssituation erkennt und daraufhin an Hand der ihr nunmehr vorliegenden Steuerungs- bzw. Signalisierungsinformation die Herstellung einer Kommunikationsverbindung zwischen dem zweiten Kommunikationsnetz (NET2) und der Vermittlungsstelle (SWn) des ersten Kommunikationsnetzes (NET1), an der die anzurufende Teilnehmerstelle (SUB2') nunmehr erreichbar ist, über diejenige Übergangseinrichtung (MG2) bewirkt, mit der die betreffende Vermittlungsstelle (SWn) des ersten Kommunikationsnetzes (NET1) und das zweite Kommunikationsnetz (NET2) verbunden sind.

4. Verfahren nach Anspruch 3, **dadurch gekennzeichnet,dass** die jeweilige Signalisierungsverbindung zwischen der jeweiligen anrufenden Teilnehmerstelle und der jeweils anzurufenden Teilnehmerstelle in entsprechender Weise behandelt wird wie die Kommunikationsverbindung zwischen den betreffenden Teilnehmerstellen.

5. Verfahren nach Anspruch 3 oder 4, **dadurch gekennzeichnet, dass** die in den genannten Steuereinrichtungen (MGC1, MGC2) der an der jeweiligen Verbindung beteiligten Übergangseinrichtungen (MG1 bis MGn) gespeicherten Steuerungs- bzw. Signalisierungsinformationen nach Beendigung der Kommunikationsverbindung zwischen den jeweils miteinander verbundenen Teilnehmerstellen gelöscht werden.
